# EUROPEAN PATENT SPECIFICATION

(11) **EP 2 737 722 B1**
(45) Date of publication and mention of the grant of the patent: **06.04.2016**
(21) Application number: 12731005.0
(22) Date of filing: 04.07.2012
(51) Int. Cl.: H04R 3/12, H04R 1/02, H04R 5/02, H04R 1/40, H04R 5/04

(54) **VEHICLE WITH SIDE WALL SPEAKERS**
FAHRZEUG MIT SEITENWANDLAUTSPRECHERN
VÉHICULE AYANT DES HAUT-PARLEURS DE PAROI LATÉRALE

(30) Priority: 28.07.2011 US 201161512523 P
(43) Date of publication of application: 04.06.2014
(73) Proprietor: Fraunhofer Gesellschaft zur Förderung der angewandten Forschung E.V., 80686 München (DE)
(72) Inventor: SILZLE, Andreas, 91054 Buckenhof (DE); HELLMUTH, Oliver, 91052 Erlangen (DE); HEISE, Ulrik, A-1130 Wien (AT); FINAUER, Stefan, 91052 Erlangen (DE); STÖCKLMEIER, Christian, 91080 Spardorf (DE)
(74) Representative: Zinkler, Franz
(86) International application number: PCT/EP2012/063002
(87) International publication number: WO 2013/013943

(56) References cited:
- EP-A1- 1 978 776
- US-A1- 2005 259 831

## Description

### Technical Field

The present invention relates to a vehicle having at least one speaker in a side wall of the vehicle and more specifically to an automobile having at least one speaker in a center pillar or B-pillar of the automobile.

EP 1 978 776 A1 discloses a system with a directional loudspeaker to reduce a direct sound. According to this document, loudspeaker elements are positioned integral with a boundary wall. It describes in detail that the loudspeaker elements are pivotably mounted to the ceiling or headliner (e.g. of a car). The loudspeaker elements produce an indirect sound field and a direct sound field, wherein the indirect sound field is reflected by at least one of the surfaces, such as the ceilings, floors, windows or other surfaces of the enclosure.

### Summary of the Invention

It is an objective of the embodiments of the present invention to provide a concept which allows a better sound perception for a passenger sitting in a vehicle.

This objective is solved by an audio system for use in a vehicle according to claim 1.

An embodiment of the present invention provides a vehicle comprising a side wall, a ceiling (or roof) and a speaker arrangement comprising at least one speaker. The speaker arrangement is positioned or arranged in or at the side wall, such that a main sound emission direction of the speaker arrangement is directed to the ceiling.

It is a core idea of embodiments of the present invention that a better sound perception for a passenger sitting in a vehicle can be achieved if a speaker arrangement of the vehicle is arranged in or at a side wall of the vehicle and a main sound emission direction of the speaker arrangement is directed to a ceiling of the vehicle. By directing the main sound emission direction of the speaker arrangement to the ceiling, a diffuse sound perception, for example, a diffuse sound cloud, can be achieved within the passenger compartment of the vehicle and hence, an improved sound perception of envelopment from the side and above can be provided.

The main sound emission direction of the speaker arrangement can be, for example, a main sound emission direction of the at least one speaker. As an example, the at least one speaker can be inclined such that its main sound emission direction is directed to the ceiling.

According to further embodiments, the main sound emission direction of the speaker arrangement can be a combined a sound emission direction of a plurality of speakers of the speaker arrangement.

According to some embodiments, the speakers of the speaker arrangement may be flat mounted speakers having their main sound emission direction not directed to the ceiling. An audio processor can be configured to provide differently delayed versions of an audio signal to different speakers of the plurality of speakers. By choosing suitable delays the main sound emission direction of the complete speaker arrangement can be directed to the ceiling of the vehicle. The delay between different speakers may depend on a distance between the speakers of the speaker arrangement. The speakers can be arranged at different heights of the side wall (e.g. in different distances from the ceiling). Lower speakers may "come early" while higher speakers "come later". In other words, a speaker which is placed closer to the ceiling receives the audio signal with more delay than a speaker which is placed further away from the ceiling. As a rule of thumb, for an inclination of 45 degrees and a distance (in height) of 10cm between two speakers of the speaker arrangement, the delay between the audio signals provided to the two speakers can be around 0.15ms.

Furthermore the main sound emission direction of the speaker arrangement may apply for a certain target frequency band of the emitted sound waves of the speakers of the speaker arrangement. As an example this target frequency band can range at least from 500kHz to 2 MHz. Hence, at least sound waves emitted by the speakers of the speaker arrangement in this target frequency band are directed to the ceiling of the vehicle.

According to further embodiments of the present invention, when the at least one speaker is inclined (e.g. with respect to the side wall), the speaker is arranged such that a sound wave emitted by the speaker along the main sound emission direction hits the ceiling of the vehicle and is reflected by the ceiling of the vehicle before it hits a passenger sitting in the vehicle. The ceiling can be configured such that it reflects the sound wave emitted from the speaker in a plurality of different directions so as to generate a diffuse sound cloud within the passenger compartment of the vehicle.

According to some embodiments of the present invention the vehicle comprises a sound wave reflector which is arranged at or in the ceiling. The main sound emission direction of the speaker is directed to this sound wave reflector. The use of the sound wave reflector at the ceiling enables a better reflection of the sound wave emitted from the speaker, when compared to only using the ceiling of the vehicle (without the additional sound wave reflector) for reflecting the sound wave emitted by the speaker.

According to further embodiments of the present invention, the vehicle comprises a sound processor or audio processor configured to receive an audio signal, to extract a diffuse portion of the audio signal and to provide the diffuse portion to the speaker. In other words, the audio processor can perform a differentiation between a diffuse portion and a directional portion of the audio signal and provides only the diffuse portion to the speaker. The combination of having the diffuse portion of the audio signal provided to the speaker and the main sound emission direction of the speaker being directed to the ceiling, leads to a further improved sound perception for a passenger sitting in the vehicle.

According to further embodiments, the vehicle can comprise a vehicle seat and another speaker. A main sound emission direction of this other speaker is directed to the vehicle seat, for example, a sound wave emitted by the other speaker along the main sound emission direction of the other speaker directly (without reflection) hits a passenger sitting on the vehicle seat. The audio processor can be further configured to extract a directional portion of the audio signal and to provide the directional portion to the other speaker. In other words, the audio processor can be configured to perform a distinction of cases for the audio signal in that it extracts the diffuse portion and the directional portion of the audio signal and provides these two portions to the different speakers. The directional portion is provided to the other speaker having its main sound emission direction directed to the vehicle seat and the diffuse portion is provided to the speaker having its main sound emission direction directed to the ceiling of the vehicle. The distinction of cases between the diffuse portion and the directional portion enables on the one hand a better diffuse sound perception for a passenger sitting on the vehicle seat and on the other hand still a perception of directional sounds.

### Short Description of the Figures

Embodiments of the present invention will be described in more detail using the accompanying figures, in which:
- Fig. 1: shows a vehicle according to an embodiment of the present invention;
- Fig. 2: shows a vehicle according to a further embodiment of the present invention;
- Fig. 3: shows a vehicle according to a further embodiment of the present invention;
- Fig. 4: shows an audio processor as it may be used in embodiments of the present invention; and
- Fig. 5: shows a possible implementation for the audio processor shown in Fig. 4.

### Description of Embodiments of the Present Invention

Before embodiments of the present invention are described in detail using the accompanying figures, it is to be pointed out that the same or functionally equal elements are given the same reference numbers in the figures and that a repeated description for elements provided with the same reference numbers is omitted. Hence, descriptions provided for elements having the same reference numbers are mutually exchangeable.

In the following a speaker arrangement in a vehicle will be described in more detail. The speaker may be part of an audio sound system which is configured to entertain or inform passengers in the vehicle. The vehicle may be, for example, an automobile, a bus, a truck, a train, a ship, a subway or an airplane. In general, the vehicle may be any means for transporting passengers in the air, on the water, on the ground or in the underground.

Furthermore the vehicle may be a passenger car.

According to embodiments, the speaker may be arranged in or at a side wall of the vehicle so that a sound wave emitted by the at least one speaker in a main sound emission direction is directed to the ceiling or roof of the vehicle. The speaker may be integrated in the side wall or attached, respectively fixed at the side wall. A sound wave which is emitted by the speaker is then reflected at the ceiling of the vehicle and scattered into the passenger compartment. The speaker may be inclined with respect to the side wall or arranged in or at the side wall, so that the main sound emission direction of the speaker is directed to the ceiling of the vehicle. This means, a main sound emission direction of the speaker and the side wall or B-pillar may comprise a certain angle α. The angle α may be, for example, between 1° and 90° or between 5° and 45°. The at least one speaker may be part of an audio sound system. According to further embodiments a plurality of speakers may be integrated in or fixed at a side wall of the vehicle. The speakers may be directed to the ceiling of the vehicle.

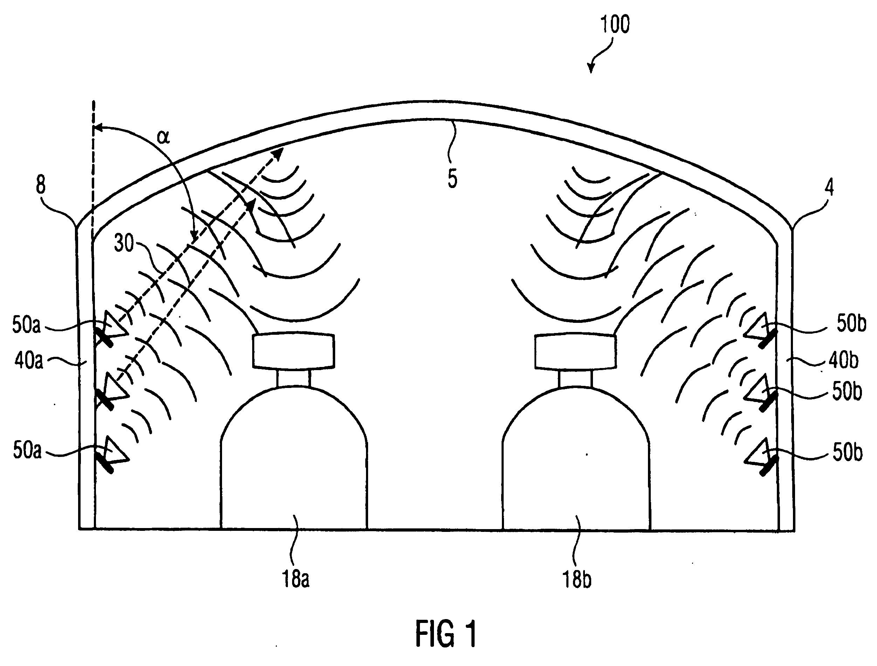

As depicted in the schematic cross sectional view in Fig. 1, according to some embodiments, at least one speaker 50a may be integrated in a center pillar or a B-pillar 40a of a vehicle 100. The B-pillar may be, for example, a B-pillar of an auto body - an automobile, a truck, a bus or a passenger car, etc. At least one speaker may be inclined and arranged in the B-pillar so that the main sound emission direction of the speaker is directed to the ceiling of the vehicle.

As schematically shown in Fig. 1, speakers may be arranged with respect to a driving direction on a left side 8 and on a right side 4 of the vehicle. The at least one speaker 50 may be inclined with respect to the B-pillar 40 so that a main sound emission direction 30 is directed to the vehicle ceiling 5. A sound wave emitted by a speaker 50a fixed or integrated in the left B-pillar 40a of the vehicle may hit the vehicle ceiling 5 above.a left vehicle seat 18a and the speaker 50b inclined and integrated or fixed at the right B-pillar 40b may hit the ceiling 5 of the vehicle above a right vehicle seat 18b. The vehicle seats may be front seats of an automobile, in other embodiments the seats may be back seats. In further embodiments the vehicle, for example, in a train, bus, airplane etc. may have a plurality of seats. The inclined integrated or fixed speakers 50a in the left B-pillar 40a may emit a sound wave which is reflected above a left vehicle seat and the right speakers 50b may be inclined and integrated in a right B-pillar 40b so that an emitted sound wave 30 is reflected above the right vehicle seat 18b. This means, a passenger who is sitting on the left vehicle seat or on the right vehicle seat may perceive a diffuse sound wave which is reflected at the ceiling of the vehicle. By means of the reflection of the sound wave at the ceiling of the vehicle it is possible to generate a diffuse sound perception for passengers in the vehicle. The sound wave which is reflected at the ceiling of the vehicle may be scattered in different directions within the passenger compartment. As a consequence, passengers sitting, for example on a rear seat in an automobile, may have the perception of a diffuse sound cloud from above.

In general the main sound direction of the at least one speaker may be directed to any location on the vehicle ceiling. Thus, the main sound direction of the at least one speaker may be directed to, for example, the center of the vehicle ceiling or to a location above a vehicle seat. Speakers which are arranged at a left and at a right side wall or B-pillar can emit sound waves which are directed to the same location on the vehicle ceiling according to some embodiments.

To summarize, Fig. 1 shows a cross-sectional view of a vehicle 100 according to an embodiment of the present invention. The vehicle 100 comprises a speaker arrangement comprising a plurality of left speakers 50a which are arranged at the left B-pillar 40a of the vehicle 100. The main sound emission directions of the left speakers 50a are directed to the ceiling 5 of the vehicle 100. Therefore, also the main sound emission direction of the speaker arrangement is directed to the ceiling 5 of the vehicle 100. Sound waves emitted from the left speakers 50a hit the ceiling 5 and are reflected or are scattered into the passenger compartment, for example, so as to hit a passenger sitting on the left seat 18a. Furthermore, the vehicle 100 comprises a further speaker arrangement comprising a plurality of right speakers 50b which are arranged at the right B-pillar 40b of the vehicle 100. The main sound emission directions of the right speakers 50b are directed to the ceiling 5 of the vehicle 100. Therefore, also the main sound emission direction of the further speaker arrangement is directed to the ceiling 5 of the vehicle 100. Hence, sound waves emitted by the plurality of right speakers 50b hit the ceiling 5 and are reflected or are scattered into the passenger compartment, so as to hit a passenger sitting on the right seat 18b.

According to some embodiments of the present invention, the (different) main sound emission directions of the plurality of left speakers 50a can be directed to the same location or to different locations of the ceiling 5 of the vehicle 100. Furthermore, the (different) main sound emission directions of the plurality of right speakers 50b can be directed to the same location or to different locations of the ceiling 5 of the vehicle 100.

According to further embodiments of the present invention, the vehicle 100 may comprise only one left speaker 50a and only one right speaker 50b.

As can be seen from Fig. 1, the left speakers 50a could be arranged such that the sound waves emitted by the left speakers 50a hit the ceiling 5 above the left seat 18a. Furthermore, the right speakers 50b can be arranged such that sound waves emitted by the right speakers 50b hit the ceiling 5 above the right seat 18b. Nevertheless, as already described, the left speakers 50a and the right speakers 50b can be also arranged such that sound waves emitted by the speakers 50a, 50b hit the ceiling 5 of the vehicle 100 in the center of the ceiling 5 (for example at a location of the ceiling 5 above a center tunnel of the vehicle 100). Furthermore, the speakers 50a, 50b can be arranged at different heights of the respective pillar 40a, 40b. Or in other words, different speakers 50a, 50b of one and the same speaker arrangement can be arranged in different distances from the ceiling 5 of the vehicle.

According to further embodiments of the present invention, at least one of the left speakers 50a may be arranged such that its main sound emission direction hits the ceiling 5 above the right seat 18b and at least another left speaker 50a can be arranged such that its main sound emission direction hits the ceiling 5 above the left seat 18a. Furthermore, also at least one of the right speakers 50b may be arranged such that its sound emission direction hits the ceiling 5 above the left seat 18a and at least another right speaker 50b may be arranged such that its main sound emission direction hits the ceiling 5 above the right seat 18b.

As an example, the left seat 18a can be a driver's seat and the right seat 18b can be a co-driver's seat (e.g. for vehicles with a left-hand drive) or the right seat 18b can be a driver's seat and the left seat 18a can be a co-driver's seat (e.g. for vehicles with a right-hand drive).

In general, the vehicle 100 may be a car, such as a passenger car.

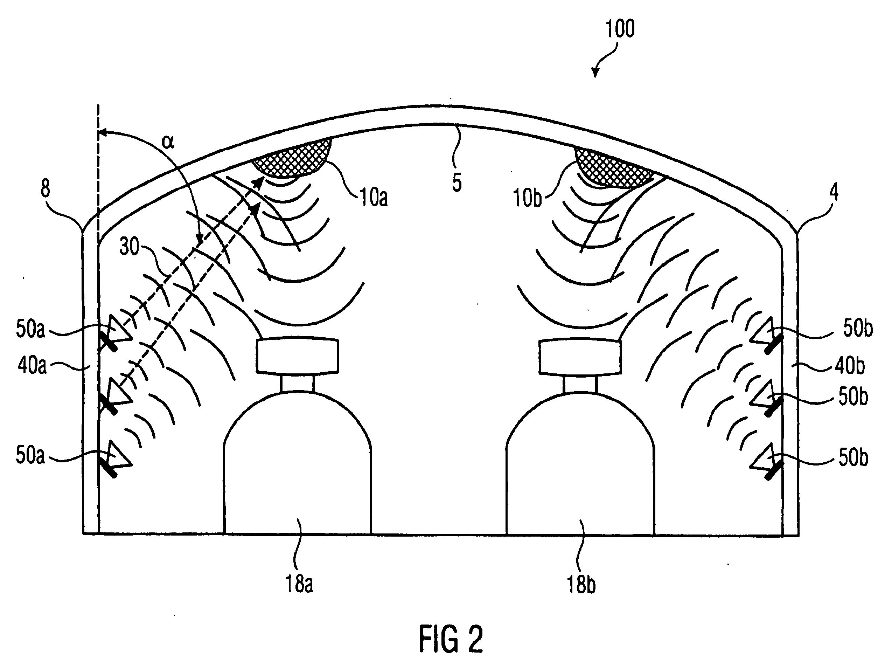

As it is schematically shown in the cross-section of an automobile, in Fig. 2, at least one sound wave reflector 10 may be arranged or fixed at the ceiling 5 of the vehicle. The sound wave reflector 10 may comprise a material which is harder than the surrounding vehicle ceiling 20. The sound wave reflector 10 may be a separate element which is mountable at the vehicle ceiling. In some embodiments, the sound wave reflectors may have a concave surface so that a sound wave which is emitted from the speaker and which is reflected at the sound wave reflector is scattered or directed in many directions within the passenger compartment. The sound wave reflector may comprise an area of 50 cm² to 10,000 cm², 100 cm² to 6,000 cm², or 200 cm² to 3,000 cm².

The speakers which are integrated or just arranged or fixed at the side wall or in the center pillar, respectively B-pillar can have a size, for example, between 1 cm and 10 cm. The speaker 50 may be a simple and cheap loud speaker. The speaker may comprise a diameter between 1 cm to 10 cm, or between 3 cm to 5 cm. The speaker may be controlled by an audio sound system so that, for example, different sound signals can be emitted from the speaker arranged at the left sidewall or arranged at the left B-pillar and from the speaker arranged at the right sidewall or arranged at the right B-pillar. The left and the right side wall respectively, the left or the right B-pillar may be arranged opposite to each other. As it is schematically shown in Fig. 2, above each vehicle seat, for example, above a left front seat 18a and above a right front seat 18b, a sound wave reflector 10a, 10b may be arranged.

According to other embodiments a common sound wave reflector may be arranged above a left and a right vehicle seat at the vehicle ceiling. The sound wave reflector may be made, for example, of plastic, synthetic material, metal, wood, etc. The sound wave reflector may have a different surface than the rest of the vehicle ceiling. The sound wave reflector may be configured to reflect a sound wave better than the remaining vehicle ceiling. This means, the sound wave reflector may have smaller sound wave absorption than the surrounding vehicle ceiling. The sound wave reflector 10 may have a higher sound wave reflectivity than the vehicle ceiling 20. The sound wave reflector 10 may be part of the vehicle ceiling and formed integrally. In other embodiments the sound wave reflector may be a separate element which is mounted at the vehicle ceiling. A sound wave which is emitted from the speaker integrated or fixed at a side wall or a B-pillar of a vehicle may be reflected with a smaller sound wave loss at the sound wave reflector 10 than a sound wave reflected at the surrounding normal vehicle ceiling 20.

It should be clear that the exact arrangement of the speaker in the side wall or, for example, in a B-pillar can be different in other embodiments and also an exact position, shape, size, material and surface structure of the sound wave reflector can be different and optimized in further embodiments. Those embodiments are also included herein. The sound wave reflector 10 material may be harder than the material of the surrounding vehicle ceiling. In some embodiments the emitted sound wave may generate a diffuse sound cloud in the passenger compartment.

In other embodiments the speakers which are integrated in the side wall or in the B-pillar of a vehicle may emit directed surround sound signals for passengers sitting in the passenger compartment.

To summarize, Fig. 2 shows a cross-sectional view of the vehicle 100 of Fig. 1 with an additional first sound wave reflector 10a and an additional second sound wave reflector 10b. The first sound wave reflector 10a is located at the ceiling 5 of the vehicle 100 above the left vehicle seat 18a and the second sound wave reflector 10b is located at the ceiling 5 above the right seat 18b of the vehicle 100.

The main sound emission directions of the left speakers 50a are directed to the first sound wave reflector 10a such that sound waves emitted by the left speakers 50a are reflected or are scattered into the passenger compartment by the first sound wave reflector 10a.

Furthermore, the main sound emission directions of the right speakers 50b are directed to the second sound wave reflector 10b such that the sound waves emitted by the right speakers 50b are reflected or are scattered into the passenger compartment by the second sound wave reflector 10b.

The sound wave reflectors 10a, 10b can be configured to reflect the sound waves emitted from the speakers 50a, 50b in a plurality of different directions within the passenger compartment of the vehicle 100 so as to generate the perception of a diffuse sound cloud in the vehicle 100.

Furthermore, the left speakers 50a can be arranged such that the main sound emission directions hit the first sound wave reflector 10a at different locations of the sound wave reflector 10a. Nevertheless, the sound wave reflector 10a can be configured to reflect each sound wave received from the left speakers 50a into a plurality of different directions. Hence, the diffuse sound perception is improved furthermore as sound waves emitted by different speakers of the left speakers 50a hit the first sound wave reflector 10a at different locations of the sound wave reflector 10a and as each sound wave emitted from one of the left speakers 50a is reflected into a plurality of different directions.

Hence, the number of reflection directions into which the sound waves emitted by the left speakers 50a are reflected is increased by letting the main sound emission directions of the different left speakers 50a hit the left sound wave reflector 10a at different locations.

The same may also apply for the right speakers 50b and the second sound wave reflector 10b.

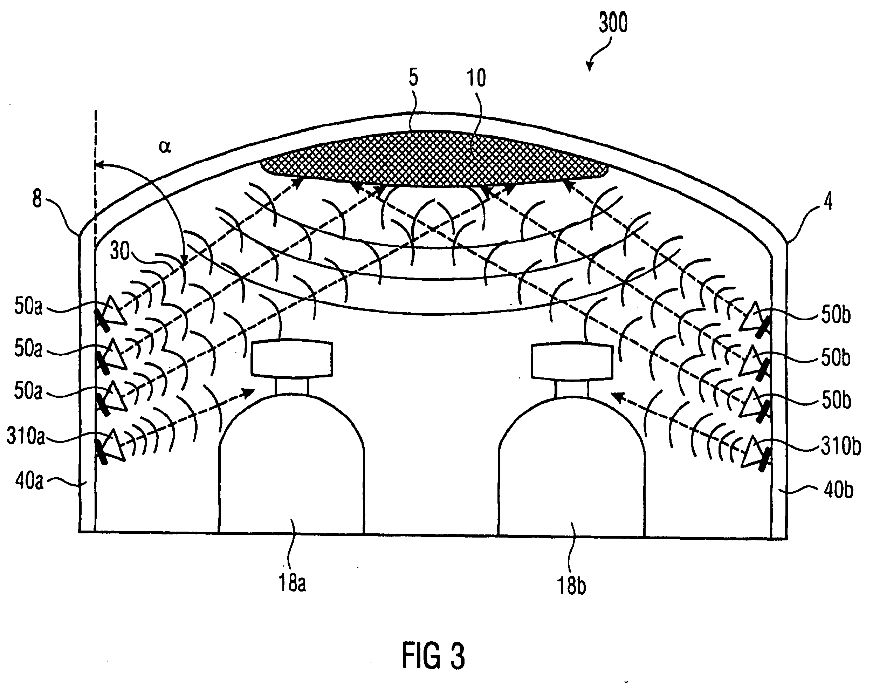

Fig. 3 shows a cross-sectional view of a vehicle 300 according to a further embodiment of the present invention.

The vehicle 300 shown in Fig. 3 differs from the vehicle 100 shown in Fig. 2, in that instead of having the two sound wave reflectors 10a, 10b, the vehicle 300 comprises a common sound wave reflector 10 located at the ceiling 5 of the vehicle 300.

As can be seen from Fig. 3, the main sound emission directions of the left speakers 50a and the main sound emission directions of the right speakers 50b are all directed to the common sound wave reflector 10. The sound wave reflector 10 is configured to reflect the sound waves emitted by the left speakers 50a and the right speakers 50b into a plurality of directions into the passenger compartment of the vehicle 300, so as to generate the perception of a diffuse sound cloud.

As an example, the vehicle 300 can further comprise an audio processor which is configured to provide audio signals to the left speaker 50a and the right speaker 50b. Especially in the embodiments shown in Fig. 3, such audio processor could be configured to provide the same audio signal to the left speakers 50a as to the right speakers 50b. Hence, although the left speakers 50a are arranged at the left B-pillar 40a and the right speakers 50b are arranged at the right B-pillar 40b, the left speakers 50 a and the right speakers 50b can be configured to receive one and the same (diffuse) audio signal or diffuse portion of an audio signal.

Furthermore, the left speaker 50a and the right speaker 50b may be arranged such that the main sound emission directions of different speakers hit the sound wave reflector 10 at different locations at the sound wave reflector 10, so as to generate a plurality of different directions, in which the sound waves emitted by the speakers 50a, 50b are reflected.

The common sound wave reflector 10 can be arranged in the center of the roof 5 (e.g. above a center tunnel of the vehicle 300). Furthermore, the sound wave reflector 10 can extend from a location of the ceiling 5 above the left vehicle seat 18a to a location of the ceiling 5 above the right vehicle seat 18b.

Furthermore, the vehicle 300 comprises a further left speaker 310a and a further right speaker 310b.

The function of the further left speakers 310a and the further right speakers 310b will be described in more detail in the following using the example of the vehicle 300 shown in Fig. 3. Nevertheless, according to further embodiments of the present invention, these further speakers 310a and 310b may be implemented in any other embodiment of the present invention (such as in the vehicle 100 shown in Fig. 1 or the vehicle 100 shown in Fig. 2).

Furthermore, according to further embodiments of the present invention, instead of having the further left speakers 310a and the further right speakers 310b, only one of these further speakers may be provided.

The further left speaker 310a is arranged at the left B-pillar 40a. A main sound emission direction of the further left speaker 310a is directed to the left vehicle seat 18a. Hence, a sound wave emitted by the further left speaker 310a directly (without reflection) hits a passenger sitting on the left vehicle seat 18a (assuming the left vehicle seat 18a is in an upright position). Furthermore, the further right speaker 310 b is arranged at the right B-pillar 40b. A main sound emission direction of the further right speaker 310b is directed to the right vehicle seat 18b. Hence, a sound wave emitted by the further right speaker 310b directly (without reflection) hits a passenger sitting on the right vehicle seat 18b. According to further embodiments of the present invention, the further left speaker 310a and the further right speaker 310b can be arranged at other positions in the vehicle 300 (such as in a door of the vehicle 300 or in a dashboard of the vehicle 300). It is only important that the main sound emission directions of the further speakers 310a, 310b are directed to the vehicle seats 18a, 18b of the vehicle 300 such that the sound waves emitted by the further speaker 310a, 310b directly (without reflection) hit a passenger sitting on the respective vehicle seat 18a, 18b. As an example, the sound emission directions of the further speakers 310a, 310b may be directed to a head rest of the respective vehicle seat 18a, 18b such that the sound waves emitted by the further speakers 310a, 310b directly hit a head of a passenger sitting on the respective vehicle seat 18a, 18b.

As already described, a vehicle according to an embodiment of the present invention can comprise an audio processor which is configured to provide audio signals to be emitted by the left speakers 50a and the right speakers 50b to the left speakers 50a and the right speakers 50b. Furthermore, such audio processor can be configured to provide audio signals to be emitted by the further left speaker 310a and the further right speaker 310b to the further left speaker 310a and the further right speaker 310b.

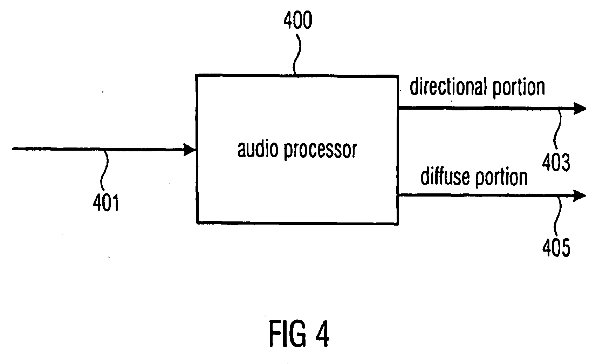

Fig. 4 shows a block schematic diagram of such an audio processor 400, which can be used in embodiments of the present invention.

The audio processor 400 is configured to receive an audio signal 401 and to extract a diffuse portion 405 of the audio signal 401. The diffuse portion 405 can be provided by the audio processor 400 to the left speakers 50a and/or the right speakers 50b. In general, the audio processor 400 can be configured to provide the diffuse portion 405 of the audio signal 401 to the speakers of a vehicle according to an embodiment of the present invention which have their main sound emission direction directed to the ceiling 5 of the vehicle (such as the speakers 50a, 50b).

Furthermore, the audio processor 400 is additionally configured to extract a directional portion 403 of the audio signal 401. The directional portion 403 can be provided by the audio processor 400 to the further left speaker 310a and/or the further right speaker 310b. In general, the directional portion 403 of the audio signal 400 can be provided by the audio processor 400 to a speaker of a vehicle according to an embodiment of the present invention, which has its main sound emission direction directed to a passenger seat, such that a sound wave emitted by the speaker directly hits the passenger sitting on the seat (without being reflected before).

As an example, the audio signal 401 may be a multi-channel audio signal comprising the directional portion 403 and the diffuse portion 405. The diffuse portion 405 typically has no directional information, whereas the directional portion 403 comprises such directional information. As an example, the directional portion 403 may comprise a left audio channel signal and a right audio channel signal, wherein the left audio channel signal can be provided to the further left speaker 310a and the right audio channel signal can be provided to the further right speaker 310b.

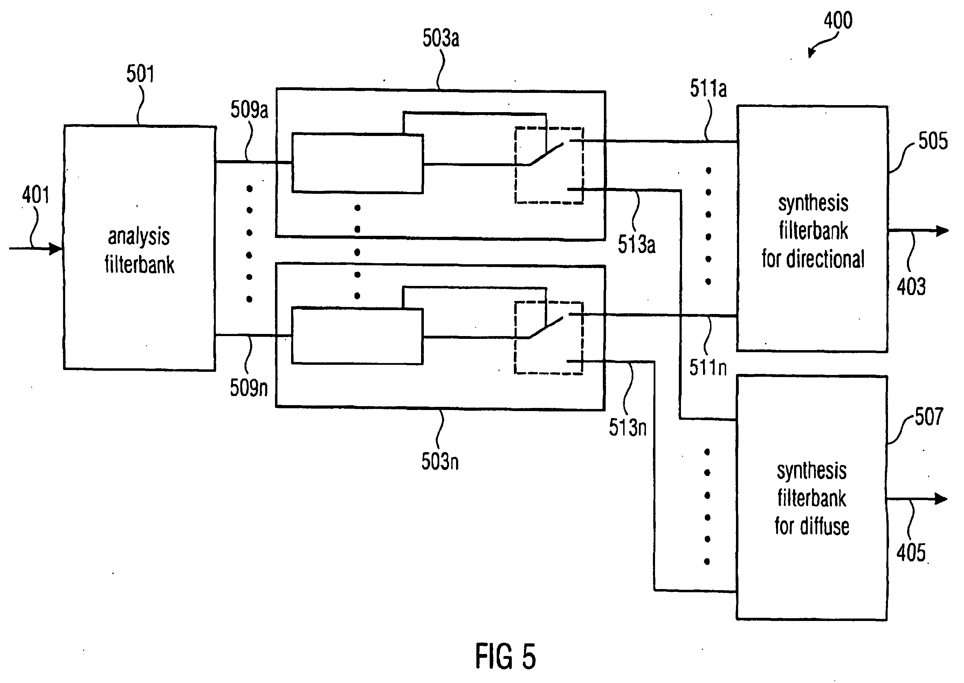

Fig. 5 shows in a block schematic diagram a possible implementation for the audio processor 400.

The audio processor 400 comprises an analysis filterbank 501, a plurality of decider stages 503a-503n, a synthesis filterbank 505 for the directional portion 403 and a synthesis filterbank 507 for the diffuse portion 405.

The analysis filterbank 501 is configured to receive the audio signal 401 and to provide a plurality of frequency subbands 509a-509n of the audio signal 401. Only, as an example, the analysis filterbank 501 may be configured to perform a Fourier transformation, such as a short time Fourier transformation to derive the plurality of frequency subbands 509a-509n. Furthermore, each of the decider stages 503a-503n is configured to receive one of the plurality of frequency subbands 509a-509n. Each of the decider stages 503a-503n is configured to decide if a current subband signal of the received frequency subband 509a-509n comprises directional information or not. If the current subband signal comprises such directional information, the current subband signal is provided to the synthesis filterbank 505 for the directional portion 403 and if the current subband signal does not comprise such directional information, the current subband signal is provided to the synthesis filterbank 507 for the diffuse portion 405.

Hence, cases may occur in which certain frequency subbands of the plurality of frequency subbands 509a-509n are only provided to the synthesis filterbank 505 for the directional portion 403, while other frequency subbands 509a-509n are provided only to the synthesis filterbank 507 for the diffuse portion 405.

To summarize, each of the decider stages 503a-503n is configured to perform a distinction of cases, if a current subband signal in a received frequency subband 509a-509n corresponds to the directional portion 403 or the diffuse portion 405 and accordingly provides this current subband signal of the frequency subbands 509a-509n either to the synthesis filterbank 505 for the directional portion 403 or the synthesis filterbank 507 for the diffuse portion 405.

The synthesis filterbank 505 for the directional portion 403 receives the subband signals 511a-511n from the deciding stages 503a-503n which correspond to the directional portion 403 and provides based on this received subband signals 511a-511n the directional potion 403 of the audio signal 401. As an example, the synthesis filterbank 507 for the directional portion 403 can be configured to perform an inverse Fourier transformation, to derive the directional portion 403 in the time domain.

Furthermore, the synthesis filterbank 507 for the diffuse portion 405 is configured to receive from the decider stages 503a-503b the subband signals 513a-513n which correspond to the diffuse portion 405. The synthesis filterbank 507 for the diffuse portion 405 is configured to derive based on this received subband signals 513a-513n in the different frequency subbands 509a-509n the diffuse portion 405 of the audio signal 401. As an example, the synthesis filterbank 505 for the diffuse portion 405 can be configured to perform an inverse Fourier transformation, to derive the diffuse portion 403 in the time domain.

The directional portion 403 may further comprise different audio channel signals for different audio channels, such as a left audio channel signal which is provided to the further left speaker 310a and a right audio channel signal which is provided to the further right speaker 310b.

In the following a short example for the directional portion 403 of the audio signal 401 and the diffuse portion 405 of the audio signal 401 shall be given.

Imaging the recording of a speech in a natural environment to derive the audio signal 401. The audio signal 401 then comprises the speech of which was recorded with a microphone in directly in front of a speaker and furthermore the sounds of nature, like a sound of the sea or a chirping of birds. Hence, the sounds of the sea and the chirping of birds can form the diffuse portion 405 of the audio signal 401 and the recorded speech of the speaker forms the directional portion 403 of the audio signal 401. By having the audio processor 400 dividing the audio signal 401 in the directional portion 403 and the diffuse portion 405 and furthermore by having the (indirect) speakers 50a, 50b and the (direct) speakers 310a, 310b a very realistic reproduction of the recorded sounds can be achieved in a vehicle according to an embodiment of the present invention.

Although in the embodiments described above, the speakers 50a, 50b are inclined such that their main sound emission directions hit the ceiling 5 of the vehicle 100, 300 the speakers may be also flat mounted speakers having their main sound emission directions not directed to the ceiling but being configured to receive differently delayed versions of an audio signal. Hence, a resulting main sound emission direction of the speaker arrangement or the further speaker arrangement comprising the left speakers 50a or the right speakers 50b can be directed to the ceiling 5 of the vehicle 100, 300, using a phased array technique as already described in the introductory part of the application. As furthermore described, the speakers 50a, 50b which are arranged closer to the ceiling 5 of the vehicle 100, 300 receive a more delayed version of an audio signal than the speakers 50a, 50b arranged further away from the ceiling 5 of the vehicle 100, 300, so as to direct the main sound emission direction of the speaker arrangement or the further speaker arrangement to the ceiling 5 of the vehicle 100, 300. As an example, the audio processor 400 described in conjunction with figure 4 and figure 5 can be configured to differently delay the diffuse portion 405 for the different speakers of the speaker arrangement and the further speaker arrangement to direct the main sound emission directions of the speaker arrangement and the further speaker arrangement to the ceiling 5 of the vehicle 100, 300. The different delays applied to the diffuse portion 405 for different speakers depend on the desired inclination of the main sound emission directions and the distance between the respective speakers of the speaker arrangement and the further speaker arrangement.

According to some embodiments the speaker arrangement comprises at least 3 speakers 50a which are arranged in different heights (above each other) in or at the side wall or B-pillar 40a. In a preferred embodiment the speaker arrangement comprises at least 5 speakers which are arranged in different heights in or at the side wall or B-pillar 40a. The same may apply for the further speaker arrangement.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A vehicle (100,300) comprising:
a side wall (40a, 40b);
a ceiling (5); and
a speaker arrangement comprising at least one speaker (50a, 50b);
wherein the speaker arrangement is positioned in or at the side wall (40a, 40b) and is configured such that a main sound emission direction (30) of the speaker arrangement is directed to the ceiling (5);
wherein the vehicle further comprises an audio processor;
**characterized in that**
the speaker arrangement comprises a plurality of speakers (50a, 50b), the at least one speaker being one of the plurality of speakers (50a, 50b);
different speakers of the plurality of speakers (50a, 50b) are positioned at different heights of the side wall (40a, 40b);
the audio processor is configured to provide to a first speaker (50a, 50b) of the plurality of speakers (50a, 50b) an audio signal and to provide a delayed version of the audio signal to a second speaker (50a, 50b) of the plurality of speakers; and
the second speaker (50a, 50b) is positioned closer to the ceiling (5) than the first speaker (50a, 50b).

2. The vehicle (100, 300) according to claim 1, further comprising:
a vehicle seat (18a, 18b);
wherein the speaker arrangement is configured such that the main sound emission direction (30) is directed to a location at the ceiling (5) above the vehicle seat (18a, 18b)

3. The vehicle (100, 300) according to claim 2,
further comprising a further vehicle seat (186) and a further speaker arrangement comprising at least one further speaker (50b);
wherein the further speaker arrangement is positioned and configured such that a further main sound emission direction of the further speaker arrangement is directed to a location at the ceiling (5) above the further vehicle seat (18b).

4. The vehicle according to claim 3,
wherein the further speaker arrangement is arranged in or at the same side wall (40a) as the speaker arrangement.

5. The vehicle (100, 300) according to claim 3,
wherein the further speaker arrangement (50b) is arranged in or at a further side wall (40b) of the vehicle (100, 300).

6. The vehicle (100, 300) according to claim 5,
wherein the side wall (40a) is a left side wall of the vehicle (100, 300) and the further side wall (40b) is a right side wall (40b) of the vehicle(100, 300).

7. The vehicle (100, 300) according to one of claims 3 to 6,
wherein the vehicle seat (18a) is a left vehicle seat (18a) and the further vehicle seat (18b) is a right vehicle seat (18b).

8. The vehicle (100, 300) according to one of claims 1 to 7,
wherein the at least one speaker (50a, 50b) is inclined (40a, 40b) such that a sound wave emitted by the at least one speaker (50a, 50b) directly hits the ceiling (5).

9. The vehicle according to claim 1 to 8,
wherein main sound emission directions of the plurality of speakers (50a, 50b) are not directed to the ceiling (5) of the vehicle (100, 300).

10. The vehicle (100, 300) according to claims 1 to 9,
wherein the side wall (40a, 40b) comprises a pillar (40a, 40b); and
wherein the speaker arrangement (50a, 50b) is arranged in or at the pillar (40a, 40b).

11. The vehicle according to one of claims 1 to 9,
wherein the vehicle (100, 300) is a passenger car (100, 300) and the side wall (40a, 40b) comprises a B-pillar (40a, 40b); and
wherein the speaker arrangement (50a, 50b) is arranged in or at the B-pillar(40a, 40b).

12. The vehicle (100, 300) according to one of claims 1 to 11,
further comprising a sound wave reflector (10, 10a, 10b) arranged at or in the ceiling (5); and
wherein the main sound emission direction (30) of the speaker arrangement is directed to the sound wave reflector (10, 10a, 10b).

13. The vehicle (100, 300) according to claim 12,
wherein a sound wave absorption of the sound wave reflector (10, 10a, 10b) is smaller than a sound wave absorption of the remaining ceiling (5).

14. The vehicle (100, 300) according to one of claims 12 to 13,
wherein the sound wave reflector (10, 10a, 10b) is configured to reflect a received sound wave emitted by the speaker arrangement in a plurality of different directions within a passenger compartment of the vehicle (100, 300).

15. The vehicle (100, 300) according to one of claims 1 to 14, further comprising:
an audio processor (400) configured to receive an audio signal (401), to extract a diffuse portion (405) of the audio signal (401) and to provide the diffuse portion (405) to the at least one speaker (50a, 50b).

16. The vehicle (100, 300) according to claim 15, further comprising:
a vehicle seat (18a, 18b); and
another speaker (310a, 310b), a main sound emission direction of which is directed to the vehicle seat (18a, 18b); and
wherein the audio processor (400) is further configured to extract a directional portion (403) of the audio signal (401) and to provide the directional portion (403) to the other speaker (310a, 310b).

17. The vehicle (100, 300) according to one of claims 1 to 16, further comprising:
an audio processor and a further speaker arrangement (50b) comprising at least one further speaker (50b);
wherein the further speaker arrangement (50b) is positioned and configured such that a further main sound emission direction of the further speaker arrangement is directed to a different location at the ceiling (5) than the main sound emission direction of the speaker arrangement; and
wherein the audio processor is configured to provide a first audio signal to the speaker arrangement and a second audio signal to the further speaker arrangement, wherein the first audio signal and second audio signal are independent from each other.

18. The vehicle (300) according to one of claims 1 to 17,
wherein the at least one speaker is a first left speaker (50a); and
wherein the side wall is a left side wall (40a) of the vehicle (300) and comprises a left B-pillar (40a);
wherein the speaker arrangement is positioned in or at the left B-pillar (40a);
wherein the vehicle (300) further comprises:
a right side wall (40b) comprising a right B-pillar (40b);
a further speaker arrangement comprising at least a first right speaker (50b), the further speaker arrangement being positioned in or at the right B-pillar (40b) and configured such that a main sound emission direction of the further speaker arrangement is directed to the ceiling (5) of the vehicle (300); and
a left seat (18a), a right seat (18b), a second left speaker (310a) and a second right speaker (310b);
wherein a main sound emission direction of the second left speaker (310a) is directed to the left seat (18a) and a main sound emission direction of the second right speaker (310b) is directed to the right seat (18b).

19. The vehicle (300) according to claim 18,
further comprising an audio processor (400) which is configured to receive an audio signal (401), to extract a diffuse portion (405) of the audio signal (401) and a directional portion (403) of the audio signal (401); and
wherein the audio processor (400) is configured to provide at least a left audio channel signal comprised in the directional portion (403) to the second left speaker (310a) and aright audio channel signal comprised in the directional portion (403) to the second right speaker (310b) and the diffuse portion (405) to the first left speaker (50a) and the second left speaker (50b).

## Patentansprüche

1. Ein Fahrzeug (100, 300), das folgende Merkmale aufweist:
eine Seitenwand (40a, 40b);
eine Decke (5); und
eine Lautsprecheranordnung, die zumindest einen Lautsprecher (50a, 50b) aufweist;
wobei die Lautsprecheranordnung in oder an der Seitenwand (40a, 40b) positioniert ist und derart ausgebildet ist, dass eine Hauptschallemissionsrichtung (30) der Lautsprecheranordnung zu der Decke (5) gerichtet ist;
wobei das Fahrzeug ferner einen Audioprozessor aufweist;
**dadurch gekennzeichnet, dass**
die Lautsprecheranordnung eine Mehrzahl von Lautsprechern (50a, 50b) aufweist, wobei der zumindest eine Lautsprecher einer der Mehrzahl von Lautsprechern (50a, 50b) ist;
verschiedene Lautsprecher der Mehrzahl von Lautsprechern (50a, 50b) an verschiedenen Höhen der Seitenwand (40a, 40b) positioniert sind;
der Audioprozessor ausgebildet ist, einem ersten Lautsprecher (50a, 50b) der Mehrzahl von Lautsprechern (50a, 50b) ein Audiosignal bereitzustellen und einem zweiten Lautsprecher (50a, 50b) der Mehrzahl von Lautsprechern eine verzögerte Version des Audiosignals bereitzustellen; und
der zweite Lautsprecher (50a, 50b) näher zu der Decke (5) positioniert ist als der erste Lautsprecher (50a, 50b).

2. Das Fahrzeug (100, 300) gemäß Anspruch 1, das ferner folgendes Merkmal aufweist:
einen Fahrzeugsitz (18a, 18b);
wobei die Lautsprecheranordnung derart ausgebildet ist, dass die Hauptschallemissionsrichtung (30) zu einem Ort an der Decke (5) oberhalb des Fahrzeugsitzes (18a, 18b) gerichtet ist.

3. Das Fahrzeug (100, 300) gemäß Anspruch 2,
das ferner einen weiteren Fahrzeugsitz (18b) und eine weitere Lautsprecheranordnung aufweist, die zumindest einen weiteren Lautsprecher (50b) aufweist;
wobei die weitere Lautsprecheranordnung derart positioniert und ausgebildet ist, dass eine weitere Hauptschallemissionsrichtung der weiteren Lautsprecheranordnung zu einem Ort an der Decke (5) oberhalb des weiteren Fahrzeugsitzes (18b) gerichtet ist.

4. Das Fahrzeug gemäß Anspruch 3,
bei dem die weitere Lautsprecheranordnung in oder an derselben Seitenwand (40a) wie die Lautsprecheranordnung angeordnet ist.

5. Das Fahrzeug (100, 300) gemäß Anspruch 3,
bei dem die weitere Lautsprecheranordnung (50b) in oder an einer weiteren Seitenwand (40b) des Fahrzeugs (100, 300) angeordnet ist.

6. Das Fahrzeug (100, 300) gemäß Anspruch 5,
bei dem die Seitenwand (40a) eine linke Seitenwand des Fahrzeugs (100, 300) ist und die weitere Seitenwand (40b) eine rechte Seitenwand (40b) des Fahrzeugs (100, 300) ist.

7. Das Fahrzeug (100, 300) gemäß einem der Ansprüche 3 bis 6,
bei dem der Fahrzeugsitz (18a) ein linker Fahrzeugsitz (18a) ist und der weitere Fahrzeugsitz (18b) ein rechter Fahrzeugsitz (18b) ist.

8. Das Fahrzeug (100, 300) gemäß einem der Ansprüche 1 bis 7,
bei dem der zumindest eine Lautsprecher (50a, 50b) derart geneigt (40a, 40b) ist, dass eine Schallwelle, die durch den zumindest einen Lautsprecher (50a, 50b) emittiert wird, direkt auf die Decke (5) trifft.

9. Das Fahrzeug gemäß Anspruch 1 bis 8,
bei dem Hauptschallemissionsrichtungen der Mehrzahl von Lautsprechern (50a, 50b) nicht zu der Decke (5) des Fahrzeugs (100, 300) gerichtet sind.

10. Das Fahrzeug (100, 300) gemäß Anspruch 1 bis 9,
bei dem die Seitenwand (40a, 40b) eine Säule (40a, 40b) aufweist; und
bei dem die Lautsprecheranordnung (50a, 50b) in oder an der Säule (40a, 40b) angeordnet ist.

11. Das Fahrzeug gemäß einem der Ansprüche 1 bis 9,
bei dem das Fahrzeug (100, 300) ein Personenkraftwagen (100, 300) ist und die Seitenwand (40a, 40b) eine B-Säule (40a, 40b) aufweist; und
bei dem die Lautsprecheranordnung (50a, 50b) in oder an der B-Säule (40a, 40b) angeordnet ist.

12. Das Fahrzeug (100, 300) gemäß einem der Ansprüche 1 bis 11,
das ferner einen Schallwellenreflektor (10, 10a, 10b) aufweist, der an oder in der Decke (5) angeordnet ist; und
bei dem die Hauptschallemissionsrichtung (30) der Lautsprecheranordnung zu dem Schallwellenreflektor (10, 10a, 10b) gerichtet ist.

13. Das Fahrzeug (100, 300) gemäß Anspruch 12,
bei dem eine Schallwellenabsorption des Schallwellenreflektors (10, 10a, 10b) kleiner als eine Schallwellenabsorption der übrigen Decke (5) ist.

14. Das Fahrzeug (100, 300) gemäß einem der Ansprüche 12 bis 13,
bei dem der Schallwellenreflektor (10, 10a, 10b) ausgebildet ist, eine empfangene Schallwelle, die durch die Lautsprecheranordnung emittiert wird, in eine Mehrzahl von verschiedenen Richtungen innerhalb eines Personenraums des Fahrzeugs (100, 300) zu reflektieren.

15. Das Fahrzeug (100, 300) gemäß einem der Ansprüche 1 bis 14, das ferner folgendes Merkmal aufweist:
einen Audioprozessor (400), der ausgebildet ist, ein Audiosignal (401) zu empfangen, einen diffusen Abschnitt (405) des Audiosignals (401) zu extrahieren und den diffusen Abschnitt (405) dem zumindest einen Lautsprecher (50a, 50b) bereitzustellen.

16. Das Fahrzeug (100, 300) gemäß Anspruch 15, das ferner folgende Merkmale aufweist:
einen Fahrzeugsitz (18a, 18b); und
einen weiteren Lautsprecher (310a, 310b), von dem eine Hauptschallemissionsrichtung zu dem Fahrzeugsitz (18a, 18b) gerichtet ist; und
wobei der Audioprozessor (400) ferner ausgebildet ist, einen gerichteten Abschnitt (403) des Audiosignals (401) zu extrahieren und den gerichteten Abschnitt (403) dem anderen Lautsprecher (310a, 310b) bereitzustellen.

17. Das Fahrzeug (100, 300) gemäß einem der Ansprüche 1 bis 16, das ferner folgende Merkmale aufweist:
einen Audioprozessor und eine weitere Lautsprecheranordnung (50b), die zumindest einen weiteren Lautsprecher (50b) aufweist;
wobei die weitere Lautsprecheranordnung (50b) derart positioniert und ausgebildet ist, dass eine weitere Hauptschallemissionsrichtung der weiteren Lautsprecheranordnung zu einem anderen Ort an der Decke (5) gerichtet ist als die Hauptschallemissionsrichtung der Lautsprecheranordnung; und
wobei der Audioprozessor ausgebildet ist, der Lautsprecheranordnung ein erstes Audiosignal und der weiteren Lautsprecheranordnung ein zweites Audiosignal bereitzustellen, wobei das erste Audiosignal und das zweite Audiosignal voneinander unabhängig sind.

18. Das Fahrzeug (300) gemäß einem der Ansprüche 1 bis 17,
bei dem der zumindest eine Lautsprecher ein erster linker Lautsprecher (50a) ist; und
bei dem die Seitenwand eine linke Seitenwand (40a) des Fahrzeugs (300) ist und eine linke B-Säule (40a) aufweist;
bei dem die Lautsprecheranordnung in oder an der linken B-Säule (40a) positioniert ist;
wobei das Fahrzeug (300) ferner folgende Merkmale aufweist:
eine rechte Seitenwand (40b), die eine rechte B-Säule (40b) aufweist;
eine weitere Lautsprecheranordnung, die zumindest einen ersten rechten Lautsprecher (50b) aufweist, wobei die weitere Lautsprecheranordnung in oder an der rechten B-Säule (40b) positioniert ist und derart ausgebildet ist, dass eine Hauptschallemissionsrichtung der weiteren Lautsprecheranordnung zu der Decke (5) des Fahrzeugs (300) gerichtet ist; und
einen linken Sitz (18a), einen rechten Sitz (18b), einen zweiten linken Lautsprecher (310a) und einen zweiten rechten Lautsprecher (310b);
wobei eine Hauptschallemissionsrichtung des zweiten linken Lautsprechers (310a) zu dem linken Sitz (18a) gerichtet ist und eine Hauptschallemissionsrichtung des zweiten rechten Lautsprechers (310b) zu dem rechten Sitz (18b) gerichtet ist.

19. Das Fahrzeug (300) gemäß Anspruch 18,
das ferner einen Audioprozessor (400) aufweist, der ausgebildet ist, ein Audiosignal (401) zu empfangen, einen diffusen Abschnitt (405) des Audiosignals (401) und einen gerichteten Abschnitt (403) des Audiosignals (401) zu extrahieren; und
wobei der Audioprozessor (400) ausgebildet ist, dem zweiten linken Lautsprecher zumindest ein linkes Audiokanalsignal, das in dem gerichteten Abschnitt (403) enthalten ist, und dem zweiten rechten Lautsprecher (310b) ein rechtes Audiokanalsignal, das in dem gerichteten Abschnitt (403) enthalten ist, und dem ersten linken Lautsprecher (50a) und dem zweiten linken Lautsprecher (50b) den diffusen Abschnitt (405) bereitzustellen.

## Revendications

1. Véhicule (100,300), comprenant:
une paroi latérale (40a, 40b);
un plafond (5); et
un aménagement de haut-parleurs comprenant au moins un haut-parleur (50a, 50b);
dans lequel l'aménagement de haut-parleurs est positionné dans ou sur la paroi latérale (40a, 40b) et est configuré de sorte qu'une direction d'émission de son principale (30) de l'aménagement de haut-parleurs soit orientée vers le plafond (5);
dans lequel le véhicule comprend par ailleurs un processeur audio;
**caractérisé par le fait que**
l'aménagement de haut-parleurs comprend une pluralité de haut-parleurs (50a, 50b), l'au moins un haut-parleur étant l'un de la pluralité de haut-parleurs (50a, 50b);
différents haut-parleurs de la pluralité de haut-parleurs (50a, 50b) sont positionnés à différentes hauteurs de la paroi latérale (40a, 40b);
le processeur audio est configuré pour fournir à un premier haut-parleur (50a, 50b) de la pluralité de haut-parleurs (50a, 50b) un signal audio et pour fournir une version retardée du signal audio à un deuxième haut-parleur (50a, 50b) de la pluralité de haut-parleurs; et
le deuxième haut-parleur (50a, 50b) est positionné plus près du plafond (5) que le premier haut-parleur (50a, 50b).

2. Véhicule (100, 300) selon la revendication 1, comprenant par ailleurs:
un siège de véhicule (18a, 18b);
dans lequel l'aménagement de haut-parleurs est configuré de sorte que la direction d'émission de son principale (30) soit orientée vers un endroit au plafond (5) au-dessus du siège de véhicule (18a, 18b).

3. Véhicule (100, 300) selon la revendication 2,
comprenant par ailleurs un autre siège de véhicule (18b) et un autre aménagement de haut-parleurs comprenant au moins un autre haut-parleur (50b);
dans lequel l'autre aménagement de haut-parleurs est positionné et configuré de sorte qu'une autre direction d'émission de son principale de l'autre aménagement de haut-parleurs soit orientée vers un endroit au plafond (5) au-dessus de l'autre siège de véhicule (18b).

4. Véhicule selon la revendication 3,
dans lequel l'autre aménagement de haut-parleurs est disposé dans ou sur la même paroi latérale (40a) que l'aménagement de haut-parleurs.

5. Véhicule (100, 300) selon la revendication 3,
dans lequel l'autre aménagement de haut-parleurs (50b) est disposé dans ou sur une autre paroi latérale (40b) du véhicule (100, 300).

6. Véhicule (100, 300) selon la revendication 5,
dans lequel la paroi latérale (40a) est une paroi latérale gauche du véhicule (100, 300) et l'autre paroi latérale (40 b) est une paroi latérale droite (40b) du véhicule (100, 300).

7. Véhicule (100, 300) selon l'une des revendications 3 à 6,
dans lequel le siège de véhicule (18a) est un siège de véhicule gauche (18a) et l'autre siège de véhicule (18b) est un siège de véhicule droit (18b).

8. Véhicule (100, 300) selon l'une des revendications 1 à 7,
dans lequel l'au moins un haut-parleur (50a, 50b) est incliné (40a, 40b) de sorte qu'une onde sonore émise par l'au moins un haut-parleur (50a, 50b) heurte directement le plafond (5).

9. Véhicule selon la revendication 1 à 8,
dans lequel les directions d'émission de son principales de la pluralité de haut-parleurs (50a, 50b) ne sont pas orientées vers le plafond (5) du véhicule (100, 300).

10. Véhicule (100, 300) selon les revendications 1 à 9,
dans lequel la paroi latérale (40a, 40b) comprend un pilier (40a, 40b); et
dans lequel l'aménagement de haut-parleurs (50a, 50b) est disposé dans ou sur le pilier (40a, 40b).

11. Véhicule selon l'une des revendications 1 à 9,
dans lequel le véhicule (100, 300) est une voiture de tourisme (100, 300) et la paroi latérale (40a, 40b) comprend un pilier B (40a, 40b); et
dans lequel l'aménagement de haut-parleurs (50a, 50b) est disposé dans ou sur le pilier B (40a, 40b).

12. Véhicule (100, 300) selon l'une des revendications 1 à 11,
comprenant par ailleurs un réflecteur d'ondes sonores (10, 10a, 10b) disposé sur ou dans le plafond (5); et
dans lequel la direction d'émission de son principale (30) de l'aménagement de haut-parleurs est orientée vers le réflecteur d'ondes sonores (10, 10a, 10b).

13. Véhicule (100, 300) selon la revendication 12,
dans lequel une absorption d'ondes sonores du réflecteur d'ondes sonores (10, 10a, 10b) est inférieure à une absorption d'ondes sonores du plafond restant (5).

14. Véhicule (100, 300) selon l'une des revendications 12 à 13,
dans lequel le réflecteur d'ondes sonores (10, 10a, 10b) est configuré de manière à réfléchir une onde sonore reçue émise par l'aménagement de haut-parleurs dans une pluralité de directions différentes à l'intérieur d'un compartiment de passagers du véhicule (100, 300).

15. Véhicule (100, 300) selon l'une des revendications 1 à 14, comprenant par ailleurs:
un processeur audio (400) configuré pour recevoir un signal audio (401), pour extraire une partie diffuse (405) du signal audio (401) et pour fournir la partie diffuse (405) à l'au moins un haut-parleur (50a, 50b).

16. Véhicule (100, 300) selon la revendication 15, comprenant par ailleurs:
un siège de véhicule (18a, 18b); et
un autre haut-parleur (310a, 310b) dont une direction d'émission de son principale est orientée vers le siège du véhicule (18a, 18b); et
dans lequel le processeur audio (400) est par ailleurs configuré pour extraire une partie directionnelle (403) du signal audio (401) et pour fournir la partie directionnelle (403) à l'autre haut-parleur (310a, 310b).

17. Véhicule (100, 300) selon l'une des revendications 1 à 16, comprenant par ailleurs:
un processeur audio et un autre aménagement de haut-parleurs (50b) comprenant au moins un autre haut-parleur (50b);
dans lequel l'autre aménagement de haut-parleurs (50b) est positionné et configuré de sorte qu'une autre direction d'émission de son principale de l'autre aménagement de haut-parleurs soit orientée vers un endroit différent au plafond (5) que la direction d'émission de son principale de l'aménagement de haut-parleurs; et
dans lequel le processeur audio est configuré pour fournir un premier signal audio à l'aménagement de haut-parleurs et un deuxième signal audio à l'autre aménagement de haut-parleurs, dans lequel le premier signal audio et le deuxième signal audio sont indépendants l'un de l'autre.

18. Véhicule (300) selon l'une des revendications 1 à 17,
dans lequel l'au moins un haut-parleur est un premier haut-parleur gauche (50a); et
dans lequel la paroi latérale est une paroi latérale gauche (40a) du véhicule (300) et comprend un pilier B gauche (40a);
dans lequel l'aménagement de haut-parleurs est positionné dans ou sur le pilier B gauche (40a);
dans lequel le véhicule (300) comprend par ailleurs:
une paroi latérale droite (40b) comprenant un pilier B droit (40b);
un autre aménagement de haut-parleurs comprenant au moins un premier haut-parleur droit (50b), l'autre aménagement de haut-parleurs étant positionné dans ou sur le pilier B droit (40b) et configuré de sorte qu'une direction d'émission de son principale de l'autre aménagement de haut-parleurs soit orientée vers le plafond (5) du véhicule (300); et
un siège gauche (18a), un siège droit (18b), un deuxième haut-parleur gauche (310a) et un deuxième haut-parleur droit (310b);
dans lequel une direction d'émission de son principale du deuxième haut-parleur gauche (310a) est orientée vers le siège gauche (18a) et une direction d'émission de son principale du deuxième haut-parleur droit (310b) est orientée vers le siège droit (18b).

19. Véhicule (300) selon la revendication 18,
comprenant par ailleurs un processeur audio (400) qui est configuré pour recevoir un signal audio (401), pour extraire une partie diffuse (405) du signal audio (401) et une partie directionnelle (403) du signal audio (401); et
dans lequel le processeur audio (400) est configuré pour fournir au moins un signal de canal audio gauche compris dans la partie directionnelle (403) au deuxième haut-parleur gauche (310a) et un signal de canal audio droit compris dans la partie directionnelle (403) au deuxième haut-parleur droit (310b) et la partie diffuse (405) au premier haut-parleur gauche (50a) et au deuxième haut-parleur gauche (50b).
